# EUROPÄISCHE PATENTSCHRIFT

(11) **EP 1 995 530 B1**
(45) Veröffentlichungstag und Bekanntmachung des Hinweises auf die Patenterteilung: **19.06.2013**
(21) Anmeldenummer: 08008909.7
(22) Anmeldetag: 14.05.2008
(51) Int. Cl.: F24F 13/02, F16L 23/14, F16L 23/032

(54) **Kaltgewalztes Flanschprofil aus Blech zum Verbinden von Luftkanalelementen**
Cold rolled flange profile from sheet metal for connecting air channel elements
Profilé à semelles en tôle laminé à froid destiné à relier des éléments de conduites d'air

(30) Priorität: 19.05.2007 DE 202007007165 U
(43) Veröffentlichungstag der Anmeldung: 26.11.2008
(73) Patentinhaber: Stephan Dick Profile GmbH, 56290 Dommershausen (DE)
(72) Erfinder: Neumann, Peter, 56290 Dommershausen (DE)
(74) Vertreter: Meinke, Dabringhaus und Partner GbR

(56) Entgegenhaltungen:
- EP-A- 0 490 280
- DE-U1- 9 301 523
- DE-U1- 20 012 782
- JP-A- 6 331 079
- NL-A- 9 400 651

## Beschreibung

Die Erfindung betrifft ein gebogenes bzw. kaltgewalztes Flanschprofil aus Blech zum Verbinden von Luftkanalelementen, mit einer auf das Ende eines Luftkanalelementes aufschiebbaren ersten Kammer und einer von dieser luftdicht abgetrennten winklig zu dieser angeordneten zweiten Kammer.

Ein solches Flanschprofil ist etwa durch das deutsche Gebrauchsmuster GM 200 12 782 U1 bekannt und ist in einem Arbeitsgang so gebogen und gewalzt, dass ein Blechstreifen der Länge nach vom einen Ende der ersten Kammer ausgehend die Außen- und Innenseite der beiden Kammern bildet und wieder am freien Ende der ersten Kammer endet. So wird ein solches Flanschprofil mit seiner ersten Kammer über die geraden Endkanten eines Luftkanalelementes geschoben, nachdem vier Profilteile auf die geeignete Länge abgelängt und durch Eckprofile verbunden wurden. Die zweite Kammer bildet dann einen Rohrflansch, der zur Außenseite des Luftflansches absteht und mit dem Rohrflansch des darauf folgenden Luftkanalelementes verbunden werden kann. Eine ähnliche Gestaltung zeigt das DE 93 01 523 U1, die NL 9 400 651 A oder die JP 06 331 079 A.

Bei früheren Flanschprofilen waren die beiden Kammern zueinander offen, aber auch die Verwendung starker Blechdicken und Abdichtungen verhinderte letztlich nicht, dass erhebliche Mengen an Falschluft von der ersten in die zweite Kammer und von dort zur Außenseite gelangten.

Erst das Abdichten des Überganges zwischen erster und zweiter Kammer führte dazu, dass Falschluft, die noch in die erste Kammer gelangen konnte, dort zurückgehalten wurde. Aufwändige Abdichtungen zwischen den Eckprofilen und der zweiten Kammer wurden damit überflüssig und damit auch die Montage vereinfacht und beschleunigt. Allerdings machte die Abdichtung ihre Schwierigkeiten. Die Abdichtung durch Verkleben (G 93 01 523) erwies sich als zu langwierig und zu wenig haltbar und die Abdichtung durch Laserverschweißen (GM 200 12 782 U1) ist zu teuer in der Herstellung. Abgesehen von der teureren Laserschweißanlage können die Flanschprofile nur mehr mit einer Geschwindigkeit von etwa 16 m/Minute gefertigt werden, verglichen mit einer Fertigungsgeschwindigkeit von etwa 50 m/Minute, wenn keine Schweißung vorgenommen wird. Außerdem muss das Profil möglicherweise wegen des Wärmeverzuges nachgerichtet werden. Schließlich ist die Verwendung sehr dünnwandiger Bleche beim Laserverschweißen problematisch, da die Wärmebeaufschlagung das Metall des das Profil bildenden Bleches verändert und somit gerade an einer Stelle in Frage stellt, wo ein federnder Schenkel des Profiles dichtend fixiert werden soll.

Grundsätzlich ist es aus der EP 0 490 280 A bekannt, Profilwandbereiche durch ineinander- bzw. übereinanderfalten miteinander zu verbinden, so dass es abgetrennte Bereiche gibt, wobei die dort gezeigten Verformungen allerdings keine dichtende Aufgabe übernehmen, sondern zur Fixierung der Eckwinkel dienen.

Somit ist es Aufgabe der Erfindung, ein Flanschprofil derart weiterzuentwickeln, dass einerseits beide Kammern gut gegeneinander abgedichtet werden, andererseits aber mit der selben Geschwindigkeit gefertigt werden können, die bei einfachen gebogenen Profilen angewandt wird, und mittels Anlagen, die nicht wesentlich teurer sind als bisher geläufige Anlagen, insbesondere soll die Verwendung sehr dünner Bleche zur Herstellung des Profiles möglich sein.

Diese Aufgabe wird dadurch gelöst, dass das Außen- und Innenblech zwischen den beiden Luftkammern übereinandergefalzt ist, wobei die den Falz bildenden vier Schichten miteinander verpresst sind. Außen- und Innenblech sind dabei in der Regel eine gemeinsame Blechbahn. Durch das Verpressen von vier Blech-Teilbahnen entsteht zwischen diesen eine "kalte" Verschweißung, wobei diese vier Bahnen, auch wenn sie aus dünnem Blech gebildet sind, eine genügende Gesamtdicke haben, um mit üblichen Walzen verpresst zu werden, bei nur zwei Bahnen wäre eine höherer Blechdicke erforderlich. Durch dieses Verpressen werden die Bahnen fest verbunden, ohne dass dabei das Metallgefüge verändert oder geschädigt wird. Dabei sieht die Erfindung auch vor, dass die Schichten des Falzes zusätzlich miteinander verclincht sind. Unter "Verclinchen" versteht man das diskontinuierliche Eindrücken zweier gegenüberliegender Stempel od. dgl. in die verpressten Bahnen. So entsteht eine Reihe von Einprägungen mit kleiner Oberfläche, die die dazwischenliegenden Blechschichten wie beim Verpressen belasten, aber über die Festigkeitsgrenze des Bleches hinausgehen, so dass das Material fließt und sich somit wirksam verbindet. Eine Reihe von "verclinchten" Stellen (eingeprägte Punkte oder Striche) ähnelt einer Folge von Schweißpunkten ohne dass eine entsprechende Versorgung mit und Regelung von Schweißstrom erforderlich wäre und ohne die starke Erwärmung der Umgebung. "Verclinchen" könnte man als "Vernieten ohne Materialzusatz" bezeichnen.

Eine solche Verbindung widersteht auch hohen Trennkräften, so dass die Blechwand, die die Außenseite der ersten Kammer bildet und im Wesentlichen federnd in die Wand eines Luftkanalelementes eingreift, infolge der Verclinchung gewissermaßen eingespannt ist und so ohne Gefährdung hohe Federkräfte aufbringen kann. Gleichzeitig fixiert die Verclinchung die Verpressung der Materialien, so dass die geschaffene Verbindung stets abdichtet. In die zweite Kammer und damit aus dem Flanschprofil heraus kann im Wesentlichen keine Fremdluft gelangen.

Es wäre möglich, die Verclinchung so durchzuführen, dass sie gewissermaßen kontinuierlich erfolgt, etwa in mehreren, zueinander versetzten Reihen. Eine Ausgestaltung der Erfindung besteht aber darin, dass die Verclinchung diskontinuierlich erfolgt. Da die Verclinchung die durch Verpressen bereits dicht verbundenen Blechbahnen nur noch völlig fixiert, können die Prägestellen, die die Verclinchung bilden, voreinander entfernt sein und etwa durch gegenüberliegende, rotierende Nocken gebildet werden.

Eine wesentliche Ausbildung der Erfindung besteht darin, dass das an der Innenseite des Flanschprofiles gelegene Blech bis zum an der Außenseite des Flanschprofiles gelegenen Blech und wieder zurück gebogen ist, wobei die umgebogenen Blechabschnitte über nahezu ihre gesamte Fläche miteinander verpresst sind, und dass das an der Außenseite des Flanschprofiles gelegene Blech um die von beiden Blechabschnitten gebildete Kante herumgeschlagen und mit deren Außenseiten verpresst und bevorzugt auch verclincht sind. Die miteinander verpressten Blechteile der Innenseite des Flanschprofiles gehen demnach von dieser Innenseite aus und erstrecken sich bis zur Außenseite, wobei die beiden Blechabschnitte ineinander übergehen. Es ist daher möglich, den Winkel der zweiten Kammer in Bezug auf die erste Kammer genau einzuhalten, da die Innenseite des Profiles in der Nähe der Abwinkelung zur Außenseite hin und wieder zurückgebogen ist.

Eine weitere bevorzugte Ausgestaltung der Erfindung besteht darin, dass die umgebogenen Blechabschnitte von der Innenseite der zweiten Kammer ausgehend sich bereichsweise parallel zur Innenseite der ersten Kammer erstrecken. So wird eine erste Kammer geschaffen, die in der Tiefe einen quaderförmigen Querschnitt hat, der zu dem Querschnitt der Wand des Luftkanalelementes passend bemessen ist, so dass diese Wand nur mit Widerstand in die erste Kammer eingeführt werden kann. Dadurch wird gleichzeitig der sitz und der Halt der genannten Wand in der Kammer und die Abdichtung gegenüber dem Entweichen von Falschluft gefördert. Dabei ist nicht zu befürchten, dass sich die zweite Kammer, die den Flansch bildet, verformt, denn sie ist durch die mindestens teilweise gebogenen Blechabschnitte ausgesteift und gegenüber Verformungen, die der ersten Kammer widerfahren können, entkoppelt. So müssen bei den Toleranzen, denen die erste Kammer ausgesetzt ist, nicht noch Zugaben mit einbezogen werden, so dass die erste Kammer besser und dichter auf der genannten Wand sitzt.

Zusätzlich ist bevorzugt, dass der freie Endabschnitt der umgebogenen Abschnitte sich etwa im 45°-Winkel zu den beiden Außenseiten der beiden Kammern erstreckt und dass das die Innenseite der Kammern bildende Blech um das Ende des freien Endabschnittes herumgeschlagen und dort bevorzugt verclincht ist. Dabei ist bevorzugt die Bemessung der 45°-Abschrägung so ausgelegt, dass die erste Kammer, deren Breite im Grund durch den Abstand der doppelt umgebogenen Innenwand des Flanschprofiles von der Innenwand der ersten Kammer bestimmt wird, in gleicher Breite von der Innenwand der ersten Kammer fortgesetzt wird, die um das Ende des genannten Endabschnittes herumgeschlagen ist. In der Verbreiterung der ersten Kammer, die zwischen dem zur Innenwand der ersten Kammer parallelen, umgebogenen Doppelsteg der Innenwand der zweiten Kammer und dem Beginn der die Außenwand der ersten Kammer bildenden Außenwand des Flanschprofiles vorliegt, kann sich ggf. überschüssiges Dichtmaterial ansammeln. Die genannte Außenwand des Flanschprofiles endet mit dem offenen Ende der ersten Kammer und ist zur Innenwand hin federnd geneigt, um eine Klemmkraft gegen die eingeschobene wand des Luftkanalelementes auszuüben.

Eine weitere Ausgestaltung der Erfindung liegt darin, dass zusätzlich die erste Kammer mindestens teilweise mit Abdichtmaterial gefüllt ist, um hierdurch das Austreten von Falschluft aus dem Luftkanal noch weiter zu vermeiden.

Das erfindungsgemäße Flanschprofil hat gegenüber geschweißten (auch lasergeschweißten) Profilen den Vorzug wesentlich höherer Herstellungsgeschwindigkeit bei kleineren Herstellungskosten. Gegenüber anderen Profilen wird höhere Dichtigkeit und höhere Torsionssteifigkeit erzielt, was besonders bei der Montage von Vorteil ist.

Das erfindungsgemäße Flanschprofil kann nicht nur zur Verbindung von Luftkanalelementen für Klimaanlagen eingesetzt werden, sondern auch zu allen anderen Aufgaben, zu denen es wegen seiner besonderen Dichte besonders gut geeignet sein kann, etwa zur Verbindung der Elemente von Abgas- oder Abluftelementen, etwa aus Grillküchen od. dgl.

Der Gegenstand der Erfindung wird anhand der beigefügten, schematischen Zeichnung beispielsweise noch näher erläutert. In dieser zeigen
- Fig. 1: ein mit erfindungsgemäßen Flanschprofilen bestücktes, einbaufertiges Luftkanalelement in räumlicher Darstellung,
- Fig. 2: die räumliche Darstellung eines Flanschprofilabschnittes vor dem Aufpressen auf ein Luftkanalelement, gegenüber Fig. 1 vergrößert, und

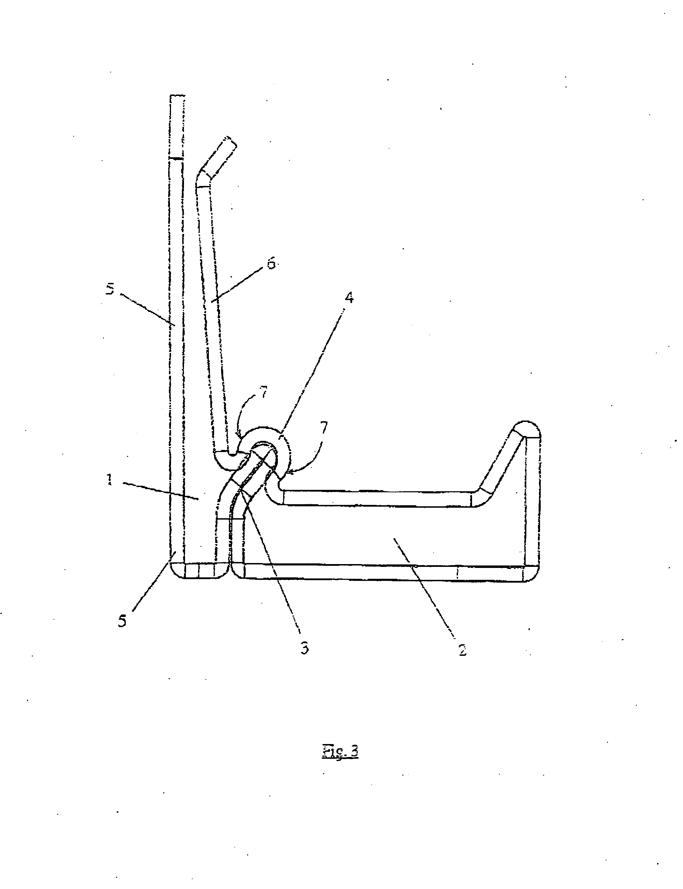

- Fig. 3: einen nochmals vergrößerten Querschnitt durch das erfindungsgemäße Flanschprofil.

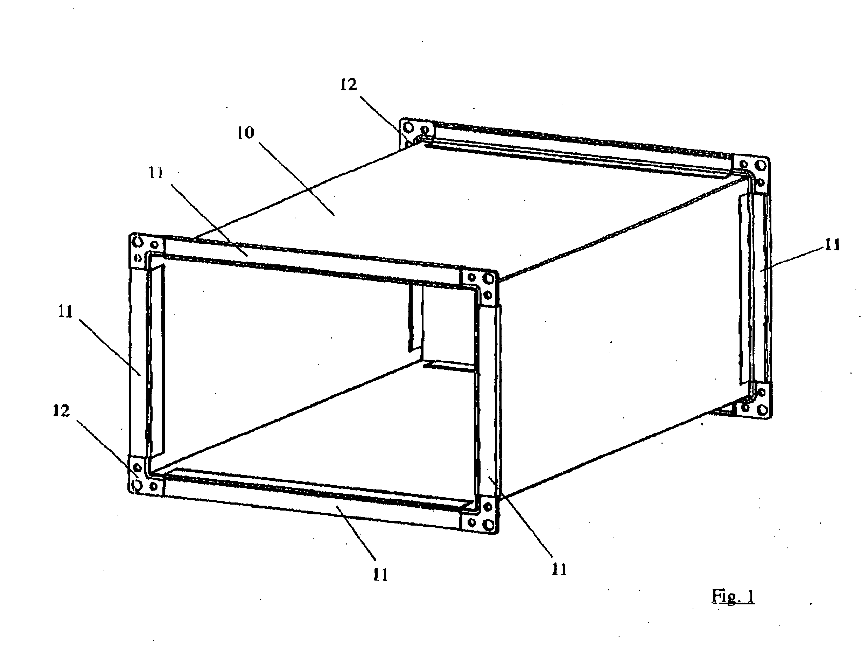

In Fig. 1 ist ein Luftkanalelement 10 gezeigt, das aus einem Rohr mit geradflächigen Wänden und rechteckigem Querschnitt gebildet ist, das senkrecht zu seiner Erstreckung beiderseits abgelängt ist. Auf jede der Endkanten ist ein Flanschprofil 11 aufgeschoben, so dass sich die Flanschteile der Profile nach außen erstrecken. An den Ecken sind Eckwinkel 12 mit ihren Enden in die Kammern 2 der Flanschprofile 11 so eingeschoben, dass eine im Wesentlichen gleichförmige Flanschfläche gebildet wird, die an der Flanschfläche eines benachbarten Luftkanalelementes befestigt wird, und zwar bevorzugt unter Zwischenanordnung einer Dichtung.

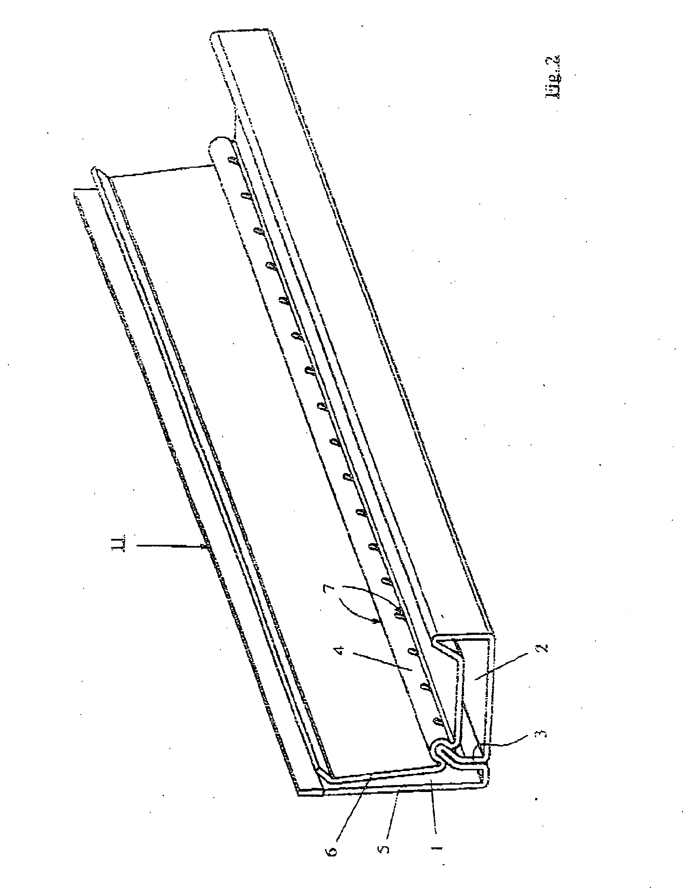

Ein Flanschprofilabschnitt ist gegenüber Fig. 1 vergrößert in Fig. 2 dargestellt. Er ist aus Blech im kontinuierlichen Verfahren mit einer Geschwindigkeit von etwa 50 m/Minute gewalzt bzw. gebogen. Das Flanschprofil weist eine erste Kammer 1 und eine zweite Kammer 2 auf, die gegenüber der ersten Kammer 1 in ihrer Erstreckung um 90° geneigt ist. Die Blechbahn, aus der das Flanschprofil gebildet ist, ist so gebogen und gewalzt, dass, bezogen auf die Montagelage, eine Außenwand 6 und eine Innenwand 5 gebildet sind, wobei sich die Außenwand 6 auf der Außenfläche des Luftkanalelementes in der Montagelage auflegt, während die Innenwand im Kanalinneren positioniert ist. Die Kammer 1 wird von Teilen der Außenwand 6 und der Innenwand 5 begrenzt und ist an der Unterseite (in der Zeichnung oben) offen, um das Einschieben der Wand eines Luftkanalelementes 10 (Fig. 1) zu ermöglichen. Die den Flansch bildende zweite Kammer 2 schließt an, aber ist durch eine Trennwand 3, die durch umgebogene Abschnitte der Innenwand 5 gebildet ist und durch einen Umschlag 4, der aus der Außenwand 6 gebildet ist, gegenüber der ersten Kammer 1 abgetrennt. Die Trennwand 3 erstreckt sich parallel zur langen Innenwand 5 der ersten Kammer 1 und ist dann, in ihrem Endabschnitt um etwa 45° von dieser Kammer 1 weg geneigt, so dass die gedachte Verlängerung dieses Endabschnittes, die äußere Eckkante der ersten Kammer 1 schneidet. Der Abstand zwischen der Trennwand 3 und der langen Innenwand 5 der ersten Kammer 1 ist so bemessen, dass sich das Flanschprofil mit Druck auf die Endkante des Luftkanalelementes 10 aufschieben lässt.

Um den Halt des Flanschprofiles 11 auf der genannten Wand des Luftkanalelementes 10 zu verbessern, ist die Außenwand 6 der ersten Kammer 1, ausgehend von der Trennwand, ein wenig zur Innenwand 5 hin geneigt und am Ende nach innen gebogen (von der Innenwand 5 weg), um ein einfaches Aufschieben auf die Wand eines Luftkanalelementes 10 zu gestatten.

Die Innenwand 5 bildet die lange Seite der ersten Kammer 1, ist dann abgewinkelt, um die kurze Seite der Kammer 1 zu bilden, bildet dann die Trennwand 3 und bildet schließlich die lange Innenseite der zweiten Kammer 2, wobei diese lange Innenseite der zweiten Kammer 2 und die kurze Seite der ersten Kammer 1 eine Ebene bilden, die lediglich im Bereich der Trennwand 3 eine Unstetigkeit aufweist. Die Außenwand 6 bildet am äußeren Ende der zweiten Kammer 2 eine nach innen vorspringende Versteifungsrippe und dann die lange Innenwand der zweiten Kammer, bis sie zur Trennwand 3 trifft. Dort ist die Außenwand 6 unter Bildung eines Umschlages 4 um das Ende der Trennwand 3 herumgeschlagen, um dann die äußere lange Seite der ersten Kammer 1 zu bilden.

Die Trennwand 3 besteht aus zwei Abschnitten der Innenwand 5, die miteinander verpresst sind. Überdies ist der Umschlag 4 mit dem Ende der Trennwand 3 verpresst. Zuletzt werden gegenüberliegende Verclinchungen 7 an beiden Seiten des Umschlages 4 angebracht, die die Außenwand 6 mit der Trennwand 3 und somit mit der Innenwand 5 gasdicht verschließen und so festlegen, dass das Auseinanderbiegen der Wände der ersten Kammer 1 den Zusammenhalt der Verbindung nicht beeinträchtigt.

Die Verclinchungen sind diskontinuierlich vorgenommen, wie sich aus Fig. 2 ersehen lässt. Der gegenseitige Abstand der einzelnen Verclinchungen 7 beträgt mindestens 1 cm.

In die erste Kammer 1 wird nötigenfalls Fett, eine Dichtschnur und/oder Bitumen eingelegt, um die Abdichtung noch zu verbessern.

## Patentansprüche

1. Gewalztes Flanschprofil (11) aus Blech zum Verbinden von Luftkanalelementen (10) mit einer auf das Ende eines Luftkanalelementes (10) aufschiebbaren ersten Kammer (1) und einer von dieser luftdicht abgetrennten, winklig zu dieser angeordneten zweiten Kammer (2),
**dadurch gekennzeichnet,**
**dass** das Außen- und Innenblech (6,5) zwischen den beiden Luftkammern (1,2) übereinandergefalzt sind, wobei die den Falz bildenden vier Schichten miteinander verpresst sind, wobei die Schichten des Falzes zusätzlich miteinander verclincht (7) sind.

2. Flanschprofil (11) nach Anspruch 1,
**dadurch gekennzeichnet,**
**dass** die Verclinchung (7) diskontinuierlich erfolgt.

3. Flanschprofil (11) nach einem der Ansprüche 1 oder 2,
**dadurch gekennzeichnet,**
**dass** das an der Innenseite des Flanschprofiles (11) gelegene Blech bis zum an der Außenseite des Flanschprofiles (11) gelegenen Blech und wieder zurück gebogen ist, wobei die umgebogenen Blechabschnitte (3) über nahezu ihre gesamte Fläche miteinander verpresst sind und dass das an der Außenseite des Flanschprofiles (11) gelegene Blech um die von beiden Blechabschnitten (3) gebildete Kante herumgeschlagen (4) und mit deren Außenseiten verpresst und bevorzugt auch verclincht (7) ist.

4. Flanschprofil (11) nach einem der Ansprüche 1 bis 3,
**dadurch gekennzeichnet,**
**dass** die umgebogenen Blechabschnitte (3) von der Innenseite der zweiten Kammer (2) ausgehend sich bereichsweise parallel zur Innenseite der ersten Kammer (1) erstrecken.

5. Flanschprofil (11) nach einem der Ansprüche 3 oder 4,
**dadurch gekennzeichnet,**
**dass** der freie Endabschnitt der umgebogenen Abschnitte (3) sich etwa im 45°-Winkel zu den beiden Außenseiten der beiden Kammern (1,2) erstreckt und dass das die Außenseite der Kammern (1,2) bildende Blech (6) um das Ende des freien Endabschnittes herumgeschlagen und dort bevorzugt verclincht ist.

6. Flanschprofil (11) nach einem der Ansprüche 1 bis 5,
**dadurch gekennzeichnet,**
**dass** die erste Kammer (1) zusätzlich mindestens teilweise mit Abdichtmaterial gefüllt ist.

## Claims

1. Rolled flange profile (11) made of sheet metal for connecting air duct elements (10) to a first chamber (1) which can be slid onto the end of an air duct element (10) and to a second chamber (2) which is separated from said first chamber in an airtight manner and is arranged at an angle thereto, **characterised in that** the outer and inner metal sheets (6, 5) are folded over one another between the two air chambers (1, 2), the four layers forming the folded joint being pressed together, the layers of the folded joint additionally being clinched (7) together.

2. Flange profile (11) according to claim 1, **characterised in that** the clinching (7) takes place discontinuously.

3. Flange profile (11) according to either claim 1 or claim 2, **characterised in that** the sheet metal positioned on the inner face of the flange profile (11) is bent as far as the sheet metal positioned on the outer face of the flange profile (11) and back again, the doubled-back sheet metal portions (3) being pressed together over almost the entire surface thereof, and **in that** the sheet metal positioned on the outer face of the flange profile (11) is wrapped (4) around the edge formed by the two sheet metal portions (3) and is pressed and preferably also clinched (7) to the outer faces of said edge.

4. Flange profile (11) according to any of claims 1 to 3, **characterised in that**, starting from the inner face of the second chamber (2), the doubled-back sheet metal portions (3) extend parallel to the inner face of the first chamber (1) in regions.

5. Flange profile (11) according to either claim 3 or claim 4, **characterised in that** the free end portion of the doubled-back portions (3) extends approximately at a 45° angle to the two outer faces of the two chambers (1, 2), and **in that** the sheet metal (6) forming the outer face of the chambers (1, 2) is wrapped around the end of the free end portion and is preferably clinched there.

6. Flange profile (11) according to any of claims 1 to 5, **characterised in that** the first chamber (1) is additionally filled at least in part with sealing material.

## Revendications

1. Profilé bridé laminé (11) formé d'une tôle pour relier des éléments de conduites d'air (10) avec une première chambre (1) qui peut glisser sur l'extrémité d'un élément de conduite d'air (10) et une seconde chambre (2) séparée de celle-ci de manière étanche à l'air et aménagée en faisant un angle avec celle-ci,
**caractérisé en ce que**
la tôle externe et la tôle interne (6, 5) sont repliées l'une sur l'autre entre les deux chambres à air (1, 2), dans lequel les quatre couches formant le repli sont pressées l'une sur l'autre, les couches du repli étant en outre serties l'une avec l'autre (7).

2. Profilé bridé (11) selon la revendication 1,
**caractérisé en ce que**
le sertissage (7) se fait de manière discontinue.

3. Profilé bridé (11) selon l'une quelconque des revendications 1 ou 2,
**caractérisé en ce que**
la tôle qui se trouve sur la face interne du profilé bridé (11) est cintrée jusqu'à la tôle qui se trouve sur la face externe du profilé bridé (11) et à nouveau cintrée, dans lequel les sections de tôle cintrées (3) sont pressées l'une sur l'autre sur presque toute leur surface, et **en ce que** la tôle se trouvant sur la face externe du profilé bridé (11) est rabattue (4) autour de l'arête formée par des deux sections de tôle (3), pressée et de préférence également sertie (7) sur les faces externes de celles-ci.

4. Profilé bridé (11) selon l'une quelconque des revendications 1 à 3,
**caractérisé en ce que**
les sections de tôle cintrées (3) s'étendent par points depuis la face interne de la seconde chambre (2) parallèlement à la face interne de la première chambre (1).

5. Profilé bridé (11) selon l'une quelconque des revendications 3 ou 4,
**caractérisé en ce que**
la section d'extrémité libre des sections cintrées (3) s'étend plus ou moins selon un angle de 45° avec des deux faces externes des deux chambres (1, 2) et la tôle (6) formant la face externe des chambres (1, 2) est rabattue autour de l'extrémité de la section d'extrémité libre et y est de préférence sertie.

6. Profilé bridé (11) selon l'une quelconque des revendications 1 à 5,
**caractérisé en ce que**
la première chambre (1) est en outre remplie au moins en partie d'un matériau étanche.
